# EUROPEAN PATENT APPLICATION

(11) **EP 4 821 356 A1**
(43) Date of publication of application: **14.10.2026**
(21) Application number: 26155275.6
(22) Date of filing: 30.01.2026
(51) Int. Cl.: A01M 7/00

(54) **LINK ASSEMBLY AND METHOD FOR TRANSMITTING A FORCE THROUGH SAID LINK ASSEMBLY**

(30) Priority: 12.03.2025 US 202519077534
(71) Applicant: Deere & Company, Moline, IL 61265 (US)
(72) Inventor: Petersen, Jacob W., 68163 Mannheim (DE); Johnson, Micah E., 68163 Mannheim (DE); Connell, Richard J., 68163 Mannheim (DE)
(74) Representative: Reichert, Christian

(57) **Abstract**

A link assembly (150) is disclosed. The link assembly (150) transmits a force provided by selective operation of a driver (154) to pivotally displace a wing assembly (104) between a folded position and an unfolded position, the link assembly (150) comprising: an inner wing hinge (200) configured to be secured to a first wing (106, 108) of the wing assembly (104), the inner wing hinge (200) including a cam slot (214) and coupled to an inner link pin (218), the cam slot (214) being defined by a cam surface (212); an outer wing hinge (300) configured to be secured to a second wing (106, 108) of the wing assembly (104), the inner wing hinge (200) and the outer wing hinge (300) being configured to be pivotally coupled together by a main pivot pin (153), the outer wing hinge (300) having a latch arm (316) that includes a latch aperture (320); an inner wing link (400) having a link slot (419) defined by at least a link cam surface (416), the link slot (419) configured for slideable and rotatable displacement of the inner wing link (400) about the inner link pin (218), the inner wing link (400) being pivotally coupled to the inner wing hinge (200) by a cam pin (252) that is configured for slideable and rotatable displacement within the cam slot (214) and against a least a portion of the cam surface (212), the inner wing link (400) further configured for pivotal coupling to the driver (154) by a link pin (446), the link slot (419) having a configuration that facilitates the inner link pin (218) being pivotally captured at a first location within the link slot (419) until the cam pin (252) is displaced to a transition point (247) of the cam slot (214); and an outer wing link (500) pivotally coupled to the driver (154) and the inner wing link (400) by the link pin (446) and pivotally coupled to the second wing (106, 108). Furthermore, a method for transmitting a force provided by selective operation of the driver (154) through the link assembly (150) is disclosed.

## Description

The present disclosure generally relates to agricultural sprayers, and, more specifically, to link assemblies for foldable wing assemblies of agricultural sprayers.

### BACKGROUND

Agricultural sprayers are utilized in conjunction with agricultural work vehicles to distribute flowable materials, such as spray solutions, over crop fields. An agricultural work vehicle, which is typically used to move the agricultural sprayer through fields during application of the flowable materials to crops, can be part of the agricultural sprayer, or be a separate vehicle. Often agricultural sprayers have boom wings that are cantilevered out from a central frame that can be coupled to the agricultural work vehicle. Such boom wings can be configured to allow agricultural sprayers to travel over crops in a manner that avoids potentially damaging contact by the agricultural sprayers to the crops. Further, such a cantilevered configuration can be sized to accommodate the agricultural sprayers dispensing, with each pass of the agricultural sprayers, flowable materials to crops across relatively large areas of the field. Thus, at least some larger agricultural sprayers can have relatively expansive widths across the length of the boom wings, including, for example, widths that can approach, or exceed, forty meters, among other widths.

### SUMMARY

The present disclosure may comprise one or more of the following features and combinations thereof.

In one implementation of the present disclosure, a link assembly is provided that transmits a force provided by selective operation of a driver to pivotally displace a wing assembly between a folded position and an unfolded position. The link assembly can include an inner wing hinge that can be configured to be secured to a first wing of the wing assembly. The inner wing hinge can include a cam slot and be coupled to an inner link pin, the cam slot being defined by a cam surface. The link assembly can also include an outer wing hinge that can be configured to be secured to a second wing of the wing assembly, the inner wing hinge and the outer wing hinge being configured to be pivotally coupled together by a main pivot pin, and the outer wing hinge can have a latch arm that includes a latch aperture. Additionally, the link assembly can include an inner wing link having a link slot defined by at least a link cam surface. The link slot can be configured for slideable and rotatable displacement of the inner wing link about the inner link pin. Additionally, the inner wing link can be pivotally coupled to the inner wing hinge by a cam pin that is configured for slideable and rotatable displacement within the cam slot and against a least a portion of the cam surface. Additionally, the inner wing link can be configured for pivotal coupling to the driver by a link pin. The link slot can have a configuration that can facilitate the inner link pin being pivotally captured at a first location within the link slot until the cam pin is displaced to a transition point of the cam slot. The link assembly can also include an outer wing link that can be pivotally coupled to the driver and the inner wing link by the link pin and pivotally coupled to the second wing.

In an example of the implementation, the inner wing hinge can comprise a first cam wall and a second cam wall, and the cam slot can comprise a first cam slot in the first cam wall and a second cam slot in the second cam wall, and the inner link pin can be coupled to both the first and second cam walls. According to another example of the implementation, the first and second cam walls can define a hinge cavity between the first and second cam walls, and the latch arm can be configured to be pivotally displaced into the hinge cavity as the wing assembly is displaced to the unfolded position. A further example, of the implementation can include the cam slot being configured to prevent the latch arm from having a contact with the cam pin as the latch arm is pivotally displaced into the hinge cavity.

According to another example of the implementation, the link slot being further configured to move the first location within the link slot away from the inner link pin upon the cam pin being displaced to the transition point. Additionally, according to another example, the cam slot can have a plurality of sections, each section of the plurality of sections defining a path along which the cam pin is to travel, and a configuration of the path of at least a first section of the plurality of sections can be different than a configuration of the path of a second section of the plurality of sections. Further, according to another example, the transition point can be positioned between the first section and the second section. According to another example of the implementation, the link slot can comprise a first link slot along a first arm portion of the inner wing link and a second link slot along a second arm portion of the inner wing link, the first and second arm portions being pivotally coupled to the cam pin. Further, according to another example, a second end of the inner wing link can include a first leg portion and a second leg portion, the first and second leg portions being pivotally coupled to the link pin, and the first and second leg portions can define an outer aperture that receives placement of a rod end of the driver. Additionally, according to another example, the outer wing link can be indirectly coupled to the outer wing link by a pivotal coupling of the outer wing link to the outer wing hinge.

According to another implementation, a link assembly is provided that transmits a force provided by selective operation of a driver to pivotally displace a wing assembly between a folded position and an unfolded position. The link assembly can include an inner wing hinge that can be configured to be secured to a first wing of the wing assembly. The inner wing hinge can include a cam slot and be coupled to an inner link pin. The link assembly can also include an outer wing hinge that can be configured to be secured to a second wing of the wing assembly, the inner wing hinge and the outer wing hinge being pivotally coupled at a main pivot, the outer wing hinge having a latch arm that includes a latch aperture. Additionally, the link assembly can include an inner wing link having a link slot that can be defined by at least a link cam surface, the inner link pin being positioned within the link slot. The link slot can be configured for the inner wing link to be pivotally displaced about the inner link pin and for the link cam surface to engage the inner link pin as the inner wing link is displaced from a first position at which the inner link pin is adjacent to a first end of the link slot to a second position at which the inner link pin is adjacent to a second end of the link slot. Further, the inner wing link can be coupled to a cam pin that is positioned in the cam slot, and the inner wing link can also be configured to be pivotally coupled to the driver. The link assembly can further include an outer wing link that can be pivotally coupled to the second wing and the driver. Additionally, the link slot can be configured to, as the wing assembly is displaced toward the unfolded position, capture that inner link pin at the first position as the inner wing link is pivotally displaced about the inner link pin and while the cam pin is displaced away from a first end of the cam slot and toward a transition point of the cam slot. Further, the cam slot can be configured for the cam pin, before the wing assembly is at the unfolded position, to be positioned at a location at which the cam pin is not contacted by the latch arm as the outer wing hinge is pivotally displaced to a position at which the latch aperture will receive the cam pin when the link assembly is in a latched state and as the inner link pin continues being captured at the first position as the inner wing link is pivotally displaced about the inner link pin. The cam slot can also be configured for, when the wing assembly is at the unfolded position and the cam pin is at or beyond the transition point, the cam pin to travel toward a second end of the cam slot as the cam pin is displaced to the latch aperture. Further, the link slot can also be configured to, when the wing assembly is at the unfolded position and the cam pin is at or beyond the transition point, guide displacement of the inner wing link toward the second position as the cam pin is displaced to the latch aperture.

According to an example of the implementation, the inner wing hinge can comprise a first cam wall and a second cam wall, the cam slot can comprise a first cam slot in the first cam wall and a second cam slot in the second cam wall, and the inner link pin can be coupled to both the first and second cam walls. Additionally, according to another example, the first and second cam walls can define a hinge cavity between the first and second cam walls, and the latch arm can be configured to be pivotally displaced into the hinge cavity as the wing assembly is displaced to the unfolded position. Further, according to an example of the implementation, the cam slot can have a plurality of sections, each section of the plurality of sections defining a path along which the cam pin is to travel, wherein the path of at least a first section of the plurality of sections has a configuration that is different than a configuration of the path of a second section of the plurality of sections, and wherein the transition point is positioned between the first section and the second section. According to an example of the implementation, a first end of the inner wing link can include a first arm portion and a second arm portion, the link slot can comprise a first link slot along the first arm portion and a second link slot along the second arm portion, and the first and second arm portions can be pivotally coupled to the cam pin. Additionally, according to another example, the outer wing link can be indirectly coupled to the outer wing link by a pivotal coupling of the outer wing link to the outer wing hinge. Additionally, according to another implementation, a method is provided for transmitting a force provided by selective operation of a driver though a link assembly to pivotally displace a wing assembly between a folded position and an unfolded position. The method can include pivotally displacing, in response to an actuation of the driver, a cam pin away from a first end of a cam slot of an inner wing hinge, the inner wing hinge being coupled to a first wing of the wing assembly, the cam pin being coupled to an inner wing link, and the inner wing link being pivotally coupled to the driver. The method can also include pivotally displacing, by a continued actuation of the driver and before the cam pin reaches a transition point in the cam slot, the inner wing link about an inner link pin, the inner link pin being coupled to the inner wing hinge, the inner link pin being positioned in a link slot of the inner wing link, a first section of the link slot configured to capture the inner link pin at a first location within the link slot as the inner wing link is rotated about the inner link pin. Further, in response to the continued actuation of the driver and before the cam pin reaches the transition point, a latch arm of an outer wing hinge can be pivotally displaced to a position at which the latch arm will receive the cam pin when the link assembly is at a latched state, the outer wing hinge being coupled to a second wing of the wing assembly. In response to the continued actuation of the driver after the wing assembly is in the unfolded position and the cam pin passes the transition point, the link slot can be displaced about the inner link pin to at least remove the inner link pin from the first location within the link slot. As the first location within the link slot is moved away from inner link pin, the cam pin can be displaced away from the transition point and toward a second end of the cam slot. Additionally, the cam pin can engage the latch arm as the cam pin moves away from the transition point to place the link assembly in the latched state. According to an example, the implementation can further comprise pivotally displacing, as the driver continues to be actuated and before the cam pin reaches the transition point, the outer wing hinge about a main pivot, the outer wing hinge pivotally coupled to the inner wing hinge at the main pivot. Additionally, according to another example, the implementation can further comprise pivotally displacing, in response to the actuation of the driver, the inner wing link, an outer wing link, and the driver about a link pin, the outer wing link being further pivotally coupled to the second wing. Further, according to another example, engaging the cam pin with the latch arm can comprise the cam pin engaging a latch surface that defines a latch aperture of the latch arm. Additionally, according to another example, engaging the cam pin can further comprise transferring a load from the inner link pin to the cam pin.

These and other features of the present disclosure will become more apparent from the following description of the illustrative implementations.

### BRIEF DESCRIPTION OF THE DRAWINGS

The disclosure contained herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
Figure 1 illustrates a rear perspective view of an exemplary agricultural sprayer with a boom assembly during a spraying operation.
Figure 2 illustrates a perspective view of a wing assembly in a folded position and having an exemplary implementation of a link assembly.
Figure 3 illustrates a top view of a portion of the illustrated wing assembly and link assembly in an unfolded position.
Figure 4 illustrates a top view of an exemplary inner wing hinge for the illustrated link assembly.
Figure 5 illustrates a front side perspective view of the inner wing hinge shown in Figure 4.
Figure 6 illustrates a rear side perspective view of the inner wing hinge shown in Figure 4.
Figure 7 illustrates a side view of an exemplary cam for the inner wing hinge shown in Figure 4.
Figure 8 illustrates a front side perspective view of an exemplary outer wing hinge for the illustrated link assembly.
Figure 9 illustrates a rear side perspective view of the exemplary outer wing hinge shown in Figure 8.
Figure 10 illustrates a side perspective view of an exemplary inner wing link for the illustrated link assembly.
Figure 11 illustrates a side view of an exemplary link cam for the inner wing link shown in Figure 10.
Figure 12 illustrates a side perspective view of an exemplary outer wing link for the illustrated link assembly.
Figure 13 illustrates a side perspective view of the inner wing link and outer wing link shown in Figures 10 and 12, respectively, coupled to a rod of a fold cylinder.
Figure 14 illustrates a top side cross-sectional view of a portion of the wing assembly and the exemplary link assembly at a folded position.
Figure 15 illustrates a top side cross-sectional view of the portion of the wing assembly and the link assembly shown in Figure 14 generally midway between the folded and unfolded positions.
Figure 16 illustrates a top side cross-sectional view of the portion of the wing assembly and the link assembly shown in Figure 14 in close proximity to unfolded position and after a latch arm of the outer wing hinge has cleared a cam pin
Figure 17 illustrates a top side cross-sectional view of the portion of the wing assembly and the link assembly shown in Figure 14 in close proximity to the unfolded position and after a latch arm has cleared a cam pin and a latch portion of the outer wing hinge is positioned to receive the cam pin.
Figure 18 illustrates a top side cross-sectional view of the of the portion of the wing assembly and the link assembly shown in Figure 14 at the unfolded position.

Corresponding reference numerals are used to indicate corresponding parts throughout the several views.

### DETAILED DESCRIPTION

While the concepts of the present disclosure are susceptible to various modifications and alternative forms, specific implementations thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one implementation," "an implementation," "an illustrative implementation," etc., indicate that the implementation described may include a particular feature, structure, or characteristic, but every implementation may or may not necessarily include that particular feature, structure, or characteristic. Moreover, such phrases are not necessarily referring to the same implementation. Further, when a particular feature, structure, or characteristic is described in connection with an implementation, it is submitted that it is within the knowledge of one skilled in the art to affect such feature, structure, or characteristic in connection with other implementations whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features may be shown in specific arrangements or orderings. However, it should be appreciated that such specific arrangements and orderings may not be required. Rather, in some implementations, such features may be arranged in a different manner or order than shown in the illustrative figures. Additionally, the inclusion of a structural or method feature in a particular figure is not meant to imply that such feature is required in all implementations and, in some implementations, may not be included or may be combined with other features.

Systems for folding sprayer boom assemblies can be configured to reduce a transport width of the boom assemblies while also seeking to attain structural integrity during field operations. Often, the configuration of foldable wing assemblies of boom assemblies can experience relatively high torques at least when unfolding, which can necessitate increased counterbalance valve pressures and added mass to associated components of the wing assemblies. Yet, despite such enhancements, such wing assembly configurations may still not sufficiently address the increasing dynamic loads associated with increasing wing assembly widths, including as the corresponding boom assemblies exceed, for example, thirty meters in width, among other widths.

Traditionally, at least certain types of boom assemblies rely on the use of gravity in connection with at least displacing a wing assembly from a folded position to an unfolded position. At least certain boom assemblies may even rely on the use of gravity to assist in connection with maintaining the wing assembly in an unfolded position. Yet such reliance on gravitational forces may necessitate that the wing assembly be at particular orientations or slopes in order to utilize gravitational forces. Moreover, in certain instances, the orientation or slope at which an agricultural machine is positioned can instead result in gravitational forces working against the ability to move, as well as maintain, a wing assembly in an unfolded position.

As the size of boom assemblies increase, the forces utilized by mechanisms to unfold the associated wing assemblies of the boom assembly, including displace an outer wing relative to an inner wing of the wing assembly, as well as to minimize or prevent any gap in a joint between an inner and outer wings when the wing assembly is unfolded, typically also increase. Yet, such increases, including overpowering, of such forces can result in components of the wing assembly, including associated pins and linkage components, being subjected to increasing levels of stresses and strains that can potentially damage and/or facilitate accelerated wear to those components. Such overpowering can also involve oversizing components of the wing assembly, which can, for example, be costly and add increased weight and size, which can adversely impact available space for complete folding of the wing assembly.

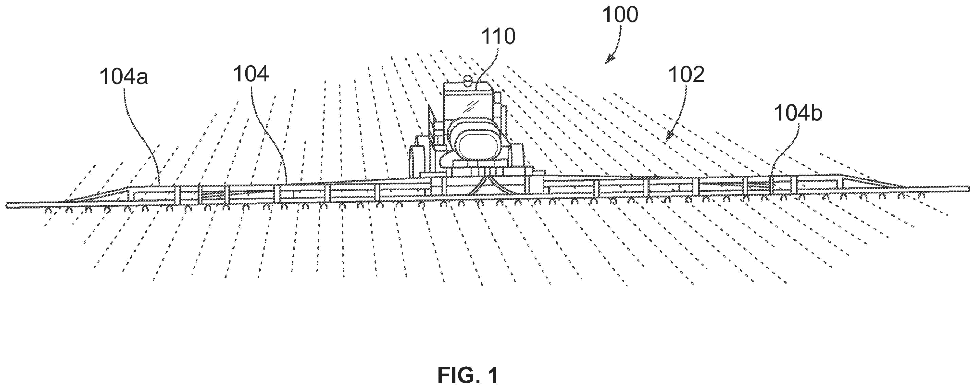

Figure 1 illustrates an exemplary agricultural sprayer 100 for agricultural spraying operations. While a particular agricultural sprayer 100 is shown in Figure 1, the agricultural sprayer 100 can have a variety of other configurations. Generally, the agricultural sprayer 100 supports a boom assembly 102, which can include first and second wing assemblies 104a, 104b (each generally referred to herein as wing assembly 104). When the boom assembly 102 is unfolded such that each of the first and second wing assemblies 104a, 104b are unfolded, the unfolded wing assemblies 104a, 104b can extend a substantial distance in opposing directions to either side of the agricultural sprayer 100. The width across at least the unfolded first and second wing assemblies 104a, 104b, and thus across the corresponding boom assembly 102, can be relatively extensive so that the boom assembly 102, including associated nozzles that extend from the wing assemblies 104a, 104b, can distribute flowable materials across to a relatively large portion of the field, including onto crops in the field. A variety of different types of agricultural work vehicles can be used as the agricultural work vehicle 110, including, but not limited to, self-propelled, autonomous, and semi-autonomous vehicles that are adapted for at least forward movement over a field.

In the illustrated implementation, the boom assembly 102 of the agricultural sprayer 100 can be generally symmetric across a width of the agricultural sprayer 100 in a direction generally perpendicular to a direction of forward travel of the agricultural sprayer 100. Accordingly, while discussion herein may be presented with respect to only one side of the boom assembly 102, and, moreover, generally to a wing assembly 104, it will be understood that such discussion can apply to either or both the first and second wing assemblies 104a, 104b.

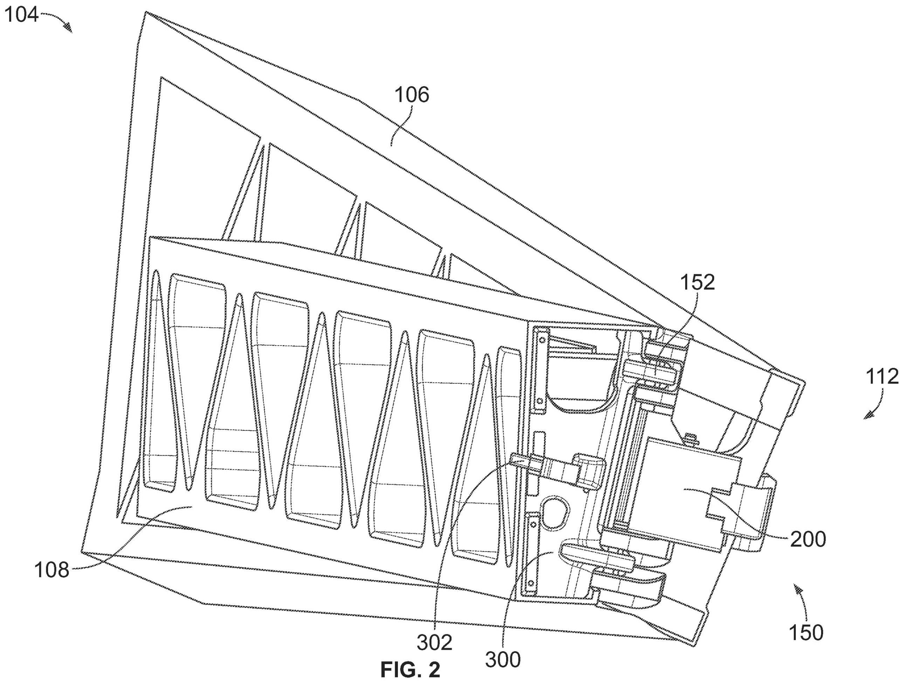

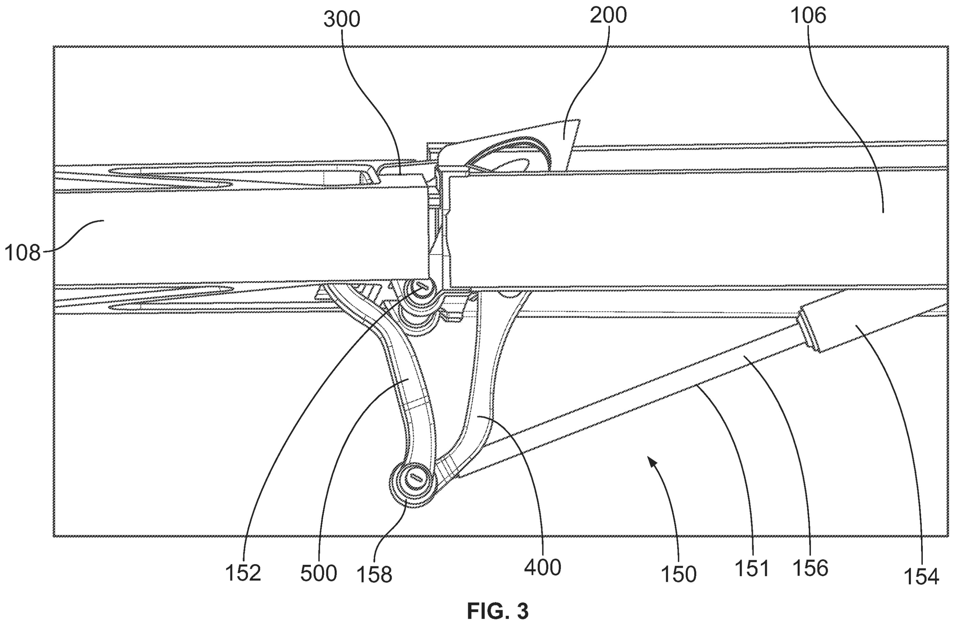

As seen in at least Figure 2 each of the first and second wing assemblies 104a, 104b can be foldable such that at least the overall width or wingspan of the boom assembly 102, as well as of corresponding width of each of the first and second wing assemblies 104a, 104b, can be reduced. For example, as seen in at least Figure 2, the illustrated wing assembly 104 can include at least two wings, namely an inner wing 106 and an outer wing 108, the outer wing 108 being farther from the associated agricultural work vehicle 110 than the inner wing 106. The inner and outer wings 106, 108 can be pivotally coupled to each other at least at a main pivot pin 153 at a primary or main pivot 152 that is generally located at, or around, a joint 112 between the inner and outer wings 106, 108. A force provided by a driver, such as, for example, a fold cylinder, can be used to facilitate the outer wing 108 being pivotally displaced relative to the inner wing 106 about a wing fold pivot axis that extends through the main pivot 152 so that the wing assembly 104 can displaced between unfolded and folded positions. As seen in at least Figures 1 and 3, when the wing assembly 104 is at the unfolded position, the outer wing 108 can be at an outwardly directed field-working position. Moreover, as seen in Figure 1, when the wing assembly 104 is at the unfolded position, the outer wing 108 can be generally aligned with the inner wing 106 so that the wing assembly 104 is generally fully unfolded. The folded position of the wing assembly can be configured to at least reduce the width or distance that the wing assembly 104 outwardly extends away from the agricultural vehicle 110. According to certain implementations, the wing fold pivot axis can be, at least at times, generally perpendicular to a forward direction of travel of the agricultural sprayer 100, as well as generally perpendicular to the adjacent ground surface upon which the agricultural sprayer 100 travels.

As seen in at least Figures 2 and 3, a link assembly 150 can assist in the pivotal displacement of the outer wing 108 relative to the inner wing 106 at the main pivot 152. The link assembly 150 can be pivotally coupled to the driver, which in the illustrated implementation is a fold cylinder 154, with the driver also being pivotally coupled to the inner wing 106. Actuation of the driver (e.g., fold cylinder 154) can facilitate the pivotal movement of the outer wing 108 in connection with displacing the wing assembly 104 between the folded position and the unfolded position.

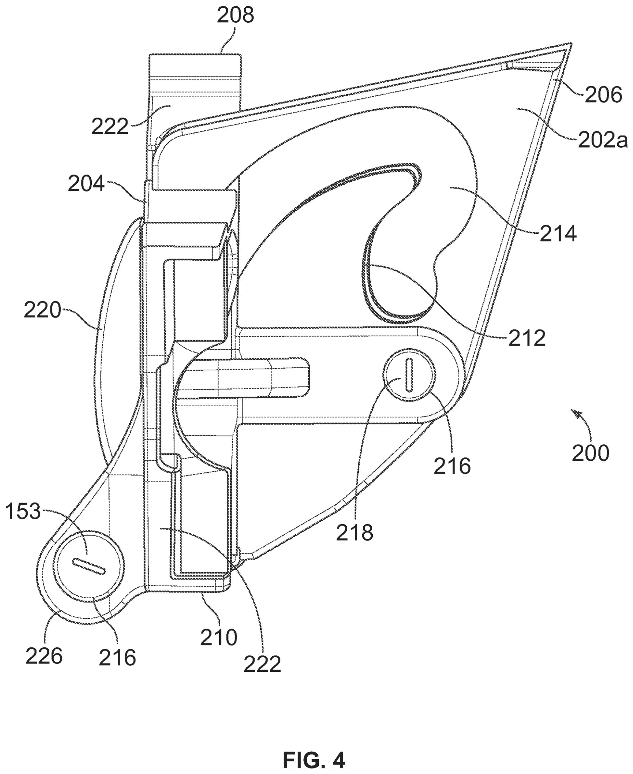

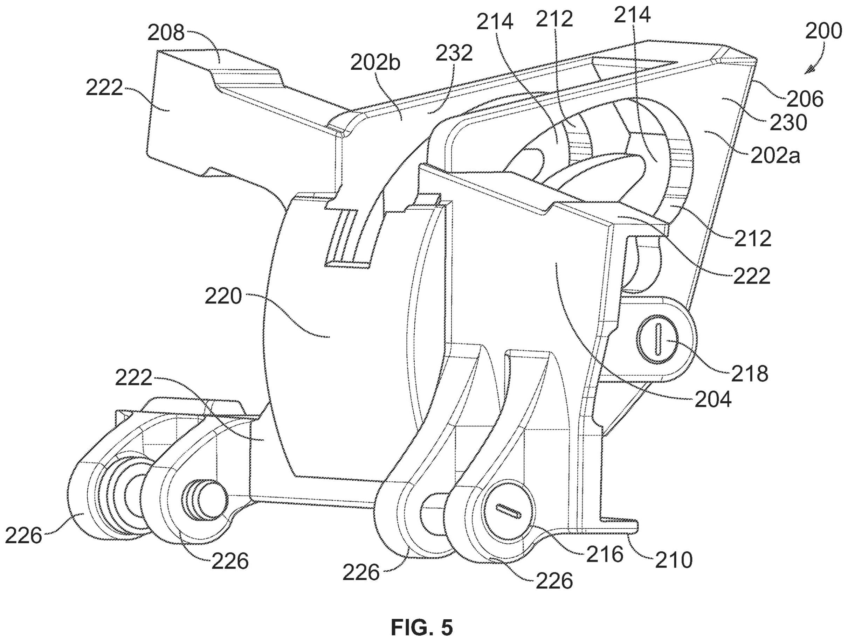

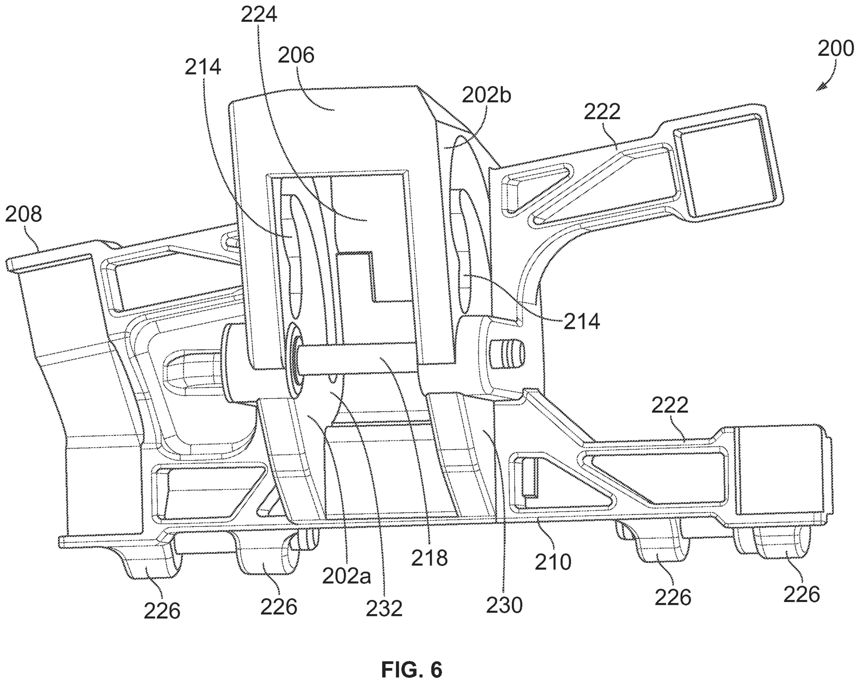

The link assembly 150 can include an inner wing hinge 200, as shown, for example, in at least Figures 4-7. The inner wing hinge 200 is securely coupled to one of the inner wing 106 and the outer wing 108. For example, in the illustrated implementation, the inner wing hinge 200 is securely coupled to the inner wing 106 in a manner in which the position of the inner wing hinge 200 remains generally static relative to the inner wing 106. For example, the inner wing hinge 200 can include one or more support arms 222 that extend across a width of the inner wing 106 to opposing sides of the inner wing hinge 200 in a first direction that, at least when the wing assembly 104 is in the unfolded position, is generally perpendicular to a forward direction of travel of the agricultural vehicle 110. The support arms 222 can engage the inner wing 106 in a manner that couples the inner wing hinge 200 to the inner wing 106 and provides support to the link assembly 150 for the displacement of the outer wing 108.

Additionally, in the illustrated implementation, the inner wing hinge 200 can be configured to pivotally couple the inner wing 106 to the main pivot pin 153, and thus, indirectly, to the outer wing 108 at the main pivot 152. For example, the inner wing hinge 200 can include one or more bosses 226 that can extend from, or around, a front portion 204 of the inner wing hinge 200. The bosses 226 can each include an orifice 216 that receives placement of at least a portion of the main pivot pin 153 of the main pivot 152.

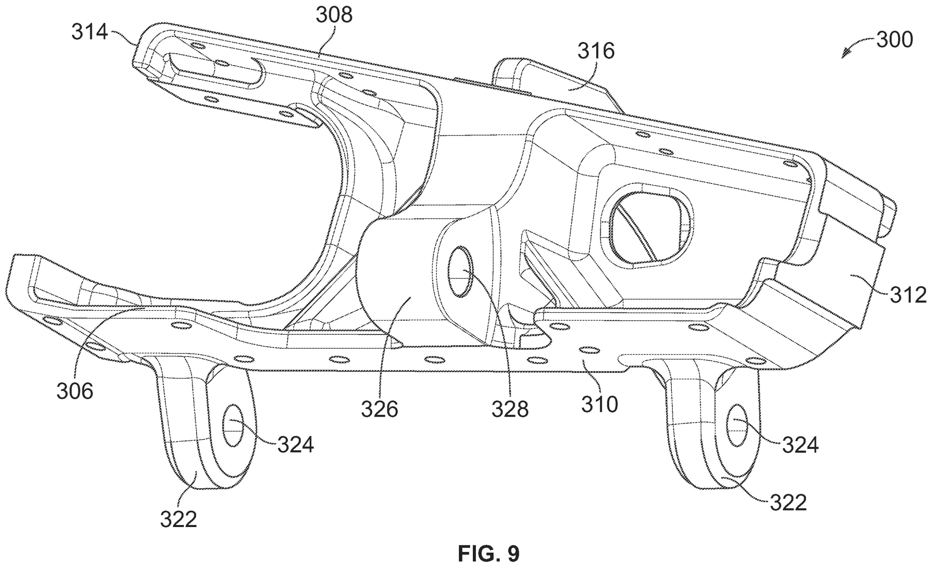

The inner wing hinge 200 can include one or more cam walls 200, including, for example, a first cam wall 202a and a second cam wall 202b (the first and second cam walls 202a, 202b each generally being referred to herein as cam wall 202). According to the illustrated implementation, the cam wall 202 can extend from around the front portion 204 to around an opposing rear portion 206 of the inner wing hinge 200. Additionally, each cam wall 202 can include an outer wall 230 and an inner wall 232. In the illustrated implementation, the inner walls 232 of each of the first and second cam walls 202 can generally define at least a portion of a hinge cavity 224 therebetween that can receive pivotal displacement of at least a portion of a latch arm 316 (Figure 9) of the outer wing hinge 300, as discussed below.

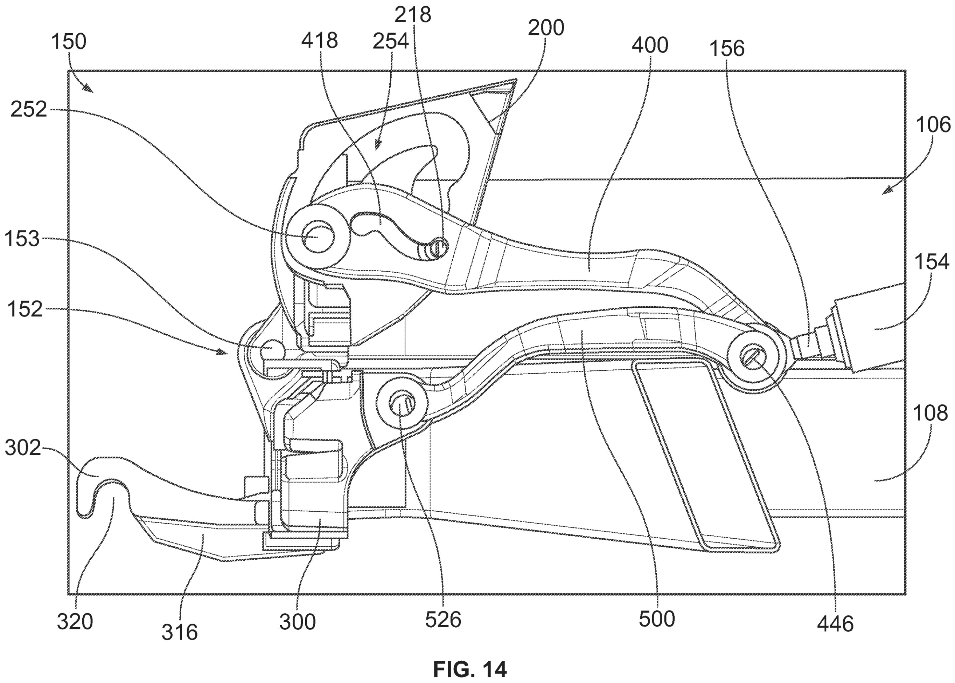

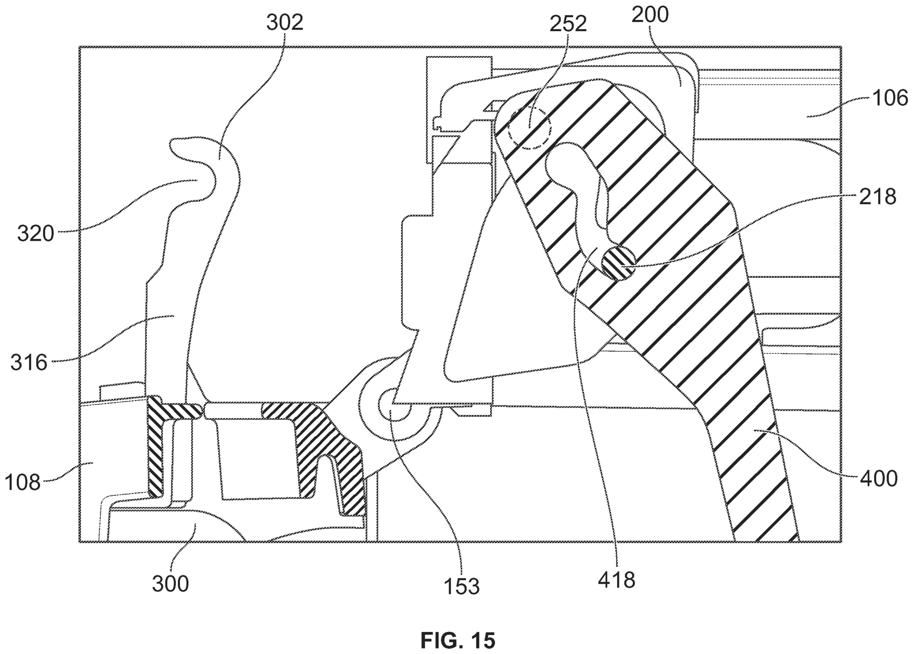

One or both of the first and second cam walls 202a, 202b can include a cam slot 214 that, along with a cam pin 252, can provide a cam 254 (Figure 15). The cam slot 214 is configured to guide a movement of the cam pin 252 (Figure 14) along one or more paths provided by the shape and/or configuration of the cam slot 214. While reference can be made herein to a cam 254 in the singular, such reference can equally apply to, and/or involve, the cams 254 of the cam walls 202a, 202b. The cam slot 214 can be defined by cam surfaces 212 that extend along at least a portion of the cam wall 202, and which provide one or more pathways along the cam slot 214 that the cam pin 252 is to follow during operation of the cam 254 as the wing assembly 104 is moved between the folded and unfolded positions.

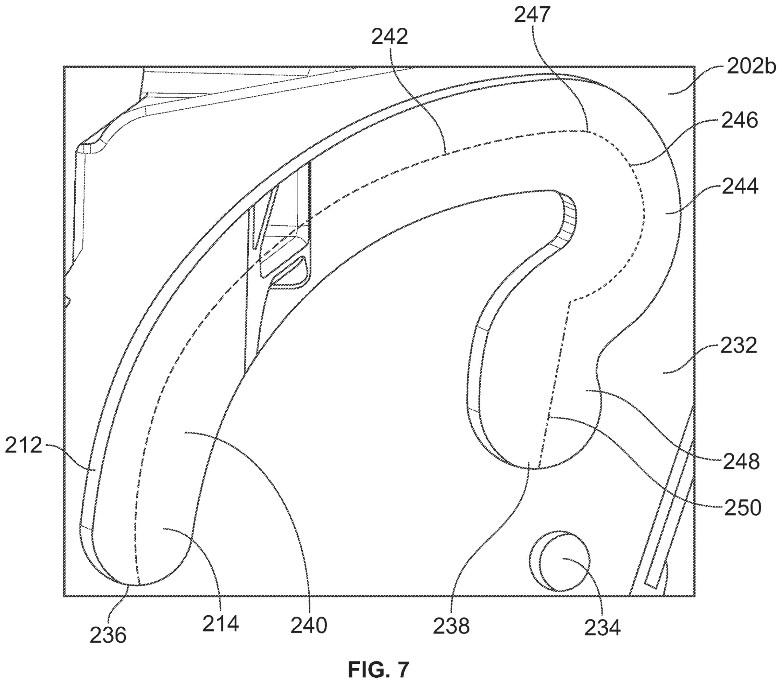

As seen in Figure 7, according to the illustrated implementation, the cam slot 214 extends from a first end 236 to a second end 238 of the cam slot 214. A first section 240 of the cam slot 214 can provide a first path 242 of travel for the cam pin 252 from around the first end 236 of the cam slot 214 to a second section 244 of the cam slot 214. According to the illustrated implementation, the first path 242 of the first section 240 can generally extend in both fore and inwardly directions about a generally constant radius. The first path 242 of the first section 240 can transition to a second path 246 of the second section 244 of the cam slot 214. The second path 246 can extend along a radius that can generally extend in aft and outwardly directions, and, moreover, can have a curvilinear form generally along a radius that can be smaller than the generally constant radius of the first path 242. In the illustrated implementation, the second path 246 can extend to a third path 250 of a third section 248 of the cam slot 214, which can generally extend in an aft direction to the second end 238 of the cam slot 214.

According to certain implementations, the size of the cam slot 214 at the second end 238 of the cam slot 214 can be larger than other portions of the cam slot 214, including, for example, with respect to the distance between or across opposing portions of the cam surface 212. For example, the portion of the cam slot 214 around the second end 238 can be enlarged relative to the cam pin 252 so as to at least provide a clearance or space between the cam pin 252 and an adjacent cam surface(s) 212 when the cam pin 252 is positioned in the second end 238 of the cam slot 214. Such a clearance between the cam pin 252 and an adjacent cam surface(s) 212 can prevent the cam pin 252 from contacting a cam surface 212 when the cam pin 252 is at the second end 238 of the cam slot 214, and, moreover, when the link assembly 150 is at the latched state. By the cam pin 252 not contacting a cam surface 212 when the link assembly 150 is at the latched state, the load on the cam pin 252 can be transmitted to the latch portion 302 of the outer wing hinge 300, and thus to the outer wing 108.

According to certain implementations, the third path 250 can generally follow along a generally straight path. Alternatively, to the extent the third path 250 is curved, the degree of curvature can be less than curvatures, including radiuses, if any, along the first and second paths 242, 246. Such an exemplary configuration of the cam slot 214, and associated one or more paths 242, 246, 250 for guiding a travel of the cam pin 252 can facilitate controlled and precise operation of the link assembly 150 during at least the displacement of the link assembly 150 between unlatched and latched states. While the illustrated cam slot 214 is discussed herein as having three sections 240, 244, 248, the number of sections 240, 244, 248, as well as the configurations of those sections 240, 244, 248, including the associated paths 242, 246, 250, can vary for other implementations.

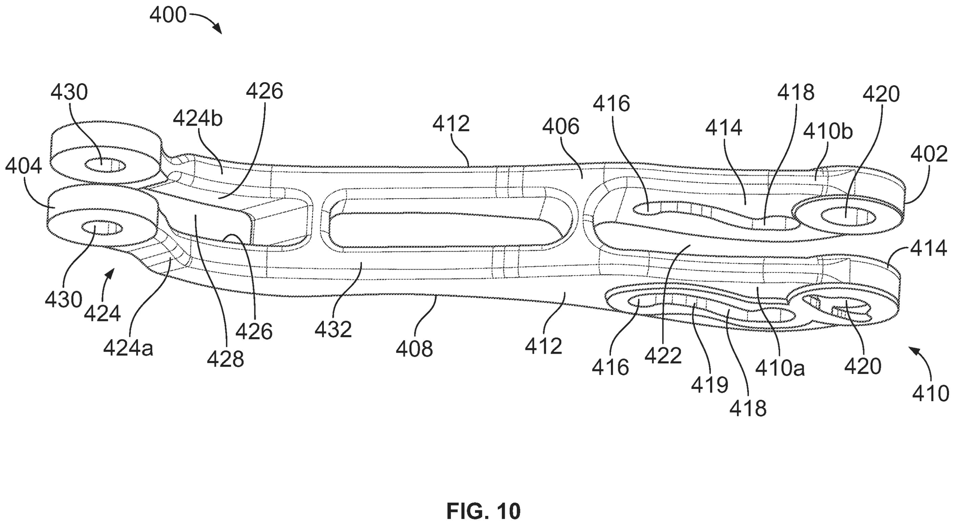

Each cam wall 202 includes a pin orifice 234 that extends through the outer and inner walls 230, 232 of the cam wall 202. The pin orifice 234 is sized to receive an inner link pin 218 that extends across at least a portion of the hinge cavity 224. In the illustrated implementation, the pin orifice 234 is positioned generally adjacent to the second end 238 of the cam slot 214. As discussed below, a portion of the inner link pin 218 is received in a link slot 419 of one or more arm portions 410a, 410b of an inner wing link 400 such that the inner link pin 218 and each link slot 419 provide a link cam 418 in the one or more arm portions 410a, 410b of the inner wing link 400, as shown in at least Figure 10.

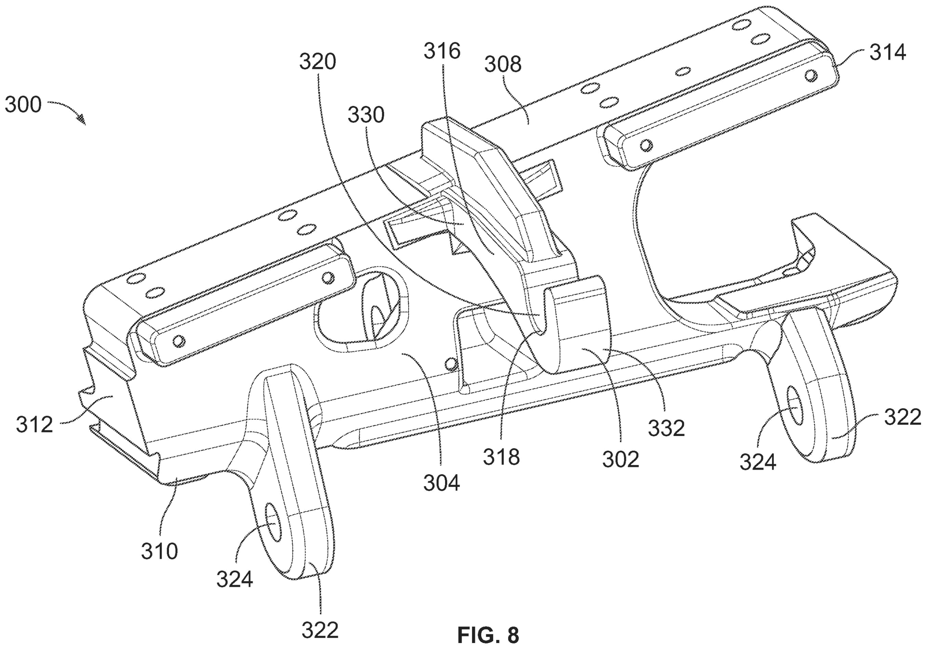

Figure 8 shows a front side perspective view of an exemplary implementation of the outer wing hinge 300. The outer wing hinge 300 can be coupled to one of the inner wing 106 and the outer wing 108, and, moreover, to the wing 106, 108 that is not coupled to the inner wing hinge 200. Thus, in the illustrated implementation, as the inner wing hinge 200 is coupled to the inner wing 106, the outer wing hinge 300 is coupled to the outer wing 108.

The outer wing hinge 300 includes a latch portion 302 that is configured to outwardly extend from a front side 304 of the outer wing hinge 300. The outer wing hinge 300 further comprises a first wall 308 and an opposing second wall 310. The first wall 308 and the second wall 310 extend between a first end 312 and a second end 314 and, in the illustrated implementation, are configured to generally conform to adjacent portions of the outer wing 108 to which the outer wing hinge 300 is securely attached. Moreover, the outer wing hinge 300 is securely affixed to the outer wing 108 such that the outer wing hinge 300 remains at a relatively static position relative to the outer wing 108.

The outer wing hinge 300 is configured to couple the outer wing 108 to the inner wing 106 via a coupling of the outer wing hinge 300 and the inner wing hinge 200 at the main pivot 152 by the main pivot pin 153. Thus, in the illustrated implementation, the outer wing hinge 300 can include one or more main pivot bosses 322 that can each include a main pivot aperture 324 that is configured to receive the main pivot pin 153 as the main pivot pin 153 also extends through the orifices 216 of the bosses 226 of the inner wing hinge 200. Such pivotal coupling of the inner wing hinge 200 and the outer wing hinge 300 allows the outer wing 108 to be pivotally displaced relative to the inner wing 106 at the main pivot 152 as the wing assembly 104 is displaced between the folded and unfolded positions.

The latch portion 302 includes a latch arm 316 that outwardly extends from the front side 304 of the outer wing hinge 300. According to the illustrated implementation, the latch arm 316 has a proximal end 330 that extends away from the front side 304 at a location at, or around, the first wall 308 of the outer wing hinge 300. The latch arm 316 can include, around a distal end 332 of the latch arm 316, a latch surface 318 that can define at least a portion of a latch aperture 320 that extends into the latch arm 316. The latch aperture 320, which can be defined by a latch surface 318, is configured to at least selectively receive placement of the cam pin 252 at least when the wing assembly 102 is in the unfolded position, as well as accommodate selective removal of the cam pin 252 from the latch aperture 320 as the wing assembly 104 is displaced from the unfolded position to the folded position.

Figure 9 shows a rear perspective view of the illustrated outer wing hinge 300. As shown, the outer wing hinge 300 includes a latch boss 326 that extends away from the back side 306 of the outer wing hinge 300 in a direction that is generally opposite to the direction that the latch arm 316 extends from the front side 304 of the outer wing hinge 300. The latch boss 326 includes a latch boss aperture 328 that is configured to receive an outer wing pin 526 (Figure 14) that pivotally couples the outer wing link 500 to the outer wing hinge 300.

Figure 10 illustrates an exemplary implementation of an inner wing link 400 that includes a leg portion 424, a body section 432, and one or more arm portions 410a, 410b (generally referred to herein as arm portion 410). The arm portion 410 can extend from the body section 432 to a first end 402 of the inner wing link 400, and the leg portion 424 can extend in a second direction from the body section 432 to a second end 404 of the inner wing link 400. The inner wing link 400 can also extend between opposing first and second sides 406, 408, the first and second sides 406, 408 being separated by at least and outer wall 412 that can extend around a periphery of the inner wing link 400.

According to the illustrated implementation, the inner wing link 400 has a first arm portion 410a and a second arm portion 410b. The first and second arm portions 410a, 410b can have generally similar configurations. Moreover, according to certain implementations, the second arm portion 410b can generally be a mirror image of the first arm portion 410a. Thus, for example, the second arm portion 410b can generally extend in a direction toward the first end 402 of the inner wing link 400 that is parallel to the first arm portion 410a. Additionally, the first arm portion 410a and the second arm portion 410b can each include a first inner wall 414 that generally faces the opposing arm portion 410a, 410b, and which define at least a portion of an inner aperture 422 that is positioned between the first and second arm portions 410a, 410b. Additionally, the first and second arm portions 410a, 410b can include, near the first end 402 of the inner wing link 400, an inner orifice 420 that is to receive placement of the cam pin 252.

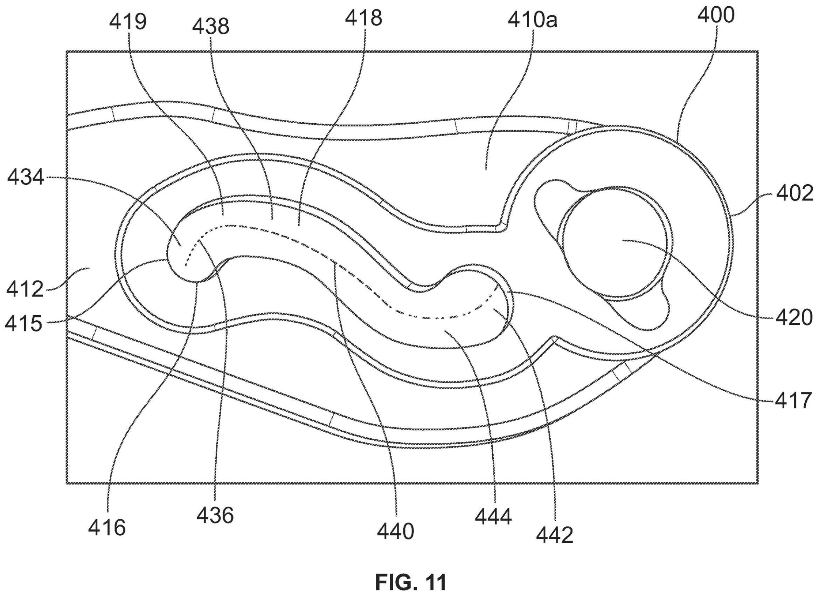

As previously mentioned, and as seen in at least Figures 10 and 11, each of the first and second arm portions 410a, 410b each include a link slot 419 that is configured to receive, and engage with, the inner link pin 218 in connection with providing the link cam 418 for guiding displacement of at least the inner wing link 400 as the wing assembly 104 is displaced between the folded and unfolded positions. While reference can be made herein to a link cam 418 in the singular, such reference can equally apply to, and/or involve, the link cam 418 of both arm portions 410a, 410b.

The link slot 419, as shown in Figure 11, is defined at least in part by the shape of a link cam surface 416. The link cam surface 416 in this example generally comprises a serpentine path that is characterized by multiple curved sections and transitions. The cam surface 416 initiates from an end of the link slot 419 and extends through a series of alternating convex and concave segments, forming a generally sinuous path, to an opposing end of the link slot 419. This configuration is intended to guide and constrain the motion of the inner wing link 400 as the inner wing link 400 moves about at least the inner link pin 218. The generally continuous curvatures of the link cam surface 416 are further configured to enable smooth and controlled movement of the inner wing link 400, as well as the cam pin 252 coupled thereto, as the wing assembly 104 is displaced between the folded and unfolded positions.

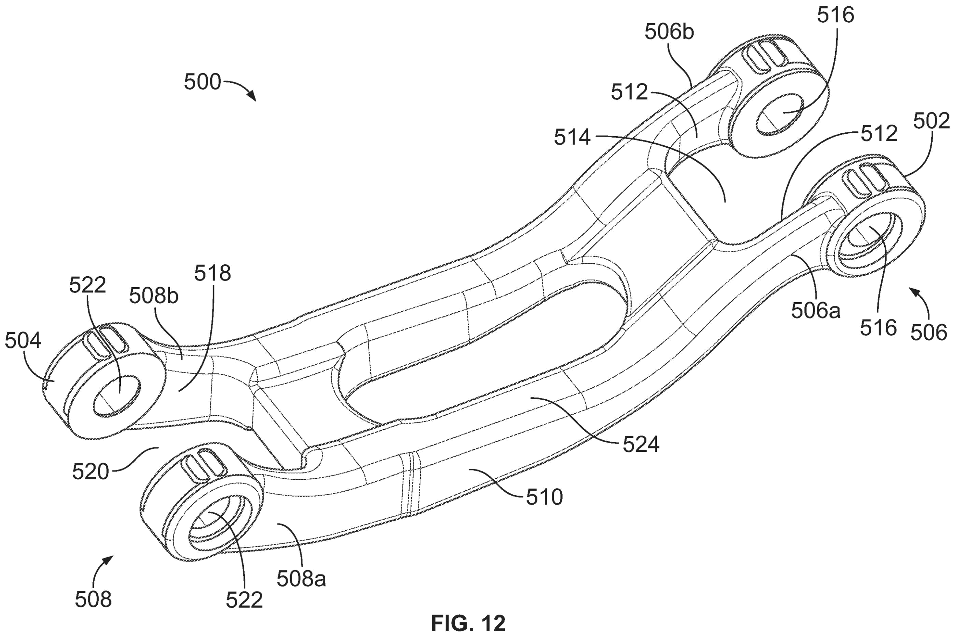

Figure 12 illustrates an exemplary implementation of inner wing link 400 that includes link slot 419. As seen, the link slot 419 extends between opposing first and second ends 415, 417 of the link slot 419, the second end 415 being in relatively close proximity to the inner orifice 420. The link slot 419 is defined by the shape of link cam surface 416, which comprises a series of paths guiding the sliding motion of the inner wing link 400 about the inner link pin 218. As shown in Figure 11, the link slot 419 provides a first path 436 for a first section 434 of the link slot 419 that extends from a first end 415 of the link slot 419 to a second path 440 of a second section 438 of the link slot 419. As discussed below, the first section 434 can be configured to capture the inner link pin 218 within the first section 434 during a portion, which can be the majority, of the pivotal movement of the outer wing 108 relative to the inner wing 106 as the wing assembly 104 is being unfolded in a manner that can prevent sliding displacement of the inner link pin 218 along the link slot 419.

The illustrated second path 440 can extend between the first path 436 and a third path 444 of a third section 442 of the link slot 419. Further, the second path 440 is generally concave with respect to the first and third paths 436, 444 as well as has a larger degree of curvature and overall length than the first and third paths 436, 444. The third path 444 can extend from the second path 440 to the second end 417 of the link slot 419. Additionally, the third path 444 can, according to certain implementations, have a degree of curvature and length that may, or may not, be generally similar to the first path 436, and which is also different than the curvature and length of the second path 440. Additionally, the portion of the third section 442 upon which the link pin 218 is positioned when the link assembly 150 is in the latched state has a size that provides a clearance about the link pin 218 to ensure the link pin 218 does not contact the link cam surface 416. For example, the third section 442 can have a size, including a diameter, such the cam surface(s) 216 adjacent to the link pin 218 is/are separated from the link pin 218 by a space(s) when the link assembly 150 is in the latched state. Preventing contact between the link pin 218 and the cam surface 416 of at least a portion of the third section 442 of the link slot 419, can prevent, at least when the link assembly 150 is in the latched state, a transfer of loads to the link pin 218.

Overall, the configuration of link slot 419, including first path 436, second path 440, and third path 444, is configured to provide a relatively smooth and controlled guidance for sliding displacement of the inner wing link 400 about the inner link pin 218, aiding in the precise movement of the link assembly 150 during the folding and unfolding of the wing assembly 104.

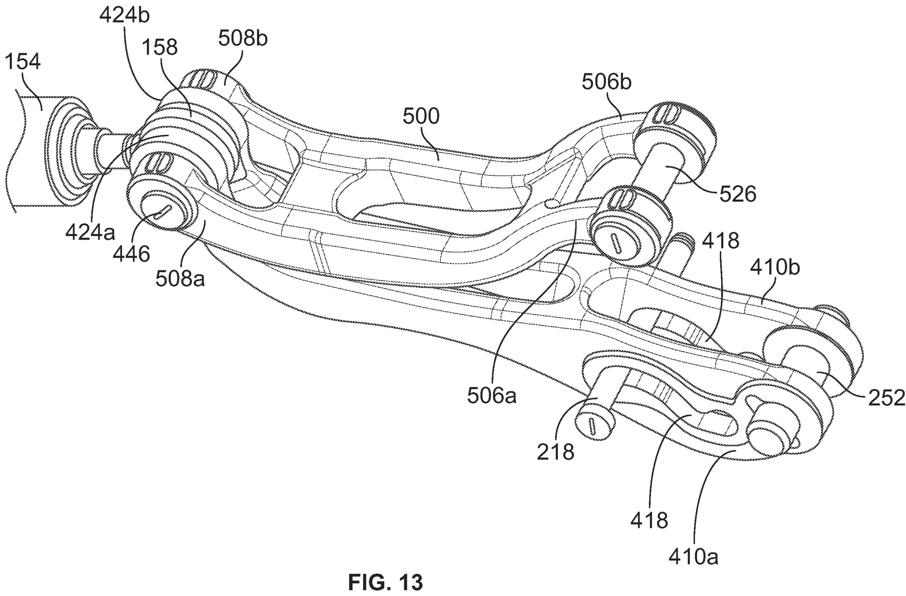

The leg portion 424 of the illustrated inner wing link 400 includes a first leg portion 424a and a second leg portion 424b. The first and second leg portions 424a, 424b are generally similar, if not mirror images, of each other. Further, both of the first and second leg portions 424a, 424b include an inwardly facing inner wall 426, each inner wall 426 defining at least a portion of an outer aperture 428 that is positioned between the first and second leg portions 424a, 424b. The outer aperture 428 is sized to at least receive placement of a rod end 158 of an extendable rod 156 of the fold cylinder 154. The first and second leg portions 424a, 424b also each include an outer orifice 430 that is sized to receive placement of a link pin 446 that pivotally couples the inner wing link 400 to the rod end 158 of the fold cylinder 154. As seen in at least Figure 13, the rod end 158 can be positioned within the outer orifice 430 between the first and second leg portions 424a, 424b such that the link pin 446 extends through an orifice of the rod end 158 and through the outer orifices 430 of the first leg portion 424a and the second leg portion 424b.

Figure 12 illustrates a perspective view of an exemplary implementation of an outer wing link 500. The illustrated outer wing link 500 can include an inner arm portion 506, a body section 524, and an outer arm portion 508. The inner arm portion 506 can extend from the body section 524 to a first end 502 of the outer wing link 500, while the outer arm portion 508 can extend from the body section 524 to a second end 504 of the outer wing link 500, the first and second ends 502, 504 being at opposing ends of the outer wing link 500. Additionally, an outer wall 510 can extend along at least outer peripheral sides of the outer wing link 500.

According to the illustrated implementation, the inner arm portion 506 can include a first inner arm portion 506a and a second inner arm portion 506b. The first and second inner arm portions 506a, 506b can have generally similar configurations. Moreover, the second inner arm portion 506b can generally be a mirror image of the first inner arm portion 506a. Thus, for example, the second inner arm portion 506b can extend parallel to the first inner arm portion 506a. Additionally, the first and second inner arm portions 506a, 506b can each include an inner wall 512 that generally faces the opposing inner arm portion 506a, 506b, and which define at least a portion of an inner aperture 514 that is positioned between the first and second inner arm portions 506a, 506b. Additionally, the first and second inner arm portions 506a, 506b can include, near the first end 502 of the outer wing link 500, an orifice 516 that is to receive placement of the outer wing pin 526 that can pivotally couple the outer wing link 500 to the outer wing 108. Further, according to certain implementations, at least a portion of the inner aperture 514 can be sized to accommodate the inner aperture 514 receiving, as being rotatably displaceable about, a portion of the outer wing 108, such as, for example, a boss(es) of the outer wing 108, that also receive insertion of the outer wing pin 526.

According to the illustrated implementation, the outer arm portion 508 can also include a first outer arm portion 508a and a second outer arm portion 508b. The first and second outer arm portions 508a, 508b can have generally similar configurations. Moreover, the second outer arm portion 508b can generally be a mirror image of the first outer arm portion 508a. Thus, for example, the second outer arm portion 508b can extend parallel to the first outer arm portion 508a. Additionally, the first and second outer arm portions 508a, 508b can each include an inner wall 518 that generally faces the opposing outer arm portion 508a, 508b, and which define at least a portion of an outer aperture 520 that is positioned between the first and second outer arm portions 508a, 508b. Additionally, the first and second outer arm portions 508a, 508b can include, near the second end 504 of the outer wing link 500, an orifice 522 that is to receive placement of the link pin 446 that can pivotally couple the outer wing link 500 to the inner wing link 400 and the rod end 158 of the fold cylinder 154. Moreover, according to certain implementations, at least a portion of the outer aperture 520 can be sized to receive a portion of the first and second leg portions 424a, 424b of the inner wing link 400 and receive the rod end 158 of the fold cylinder 154, as seen in at least Figure 13, each of which can be pivotally coupled together by the link pin 446.

Figure 14 illustrates a top side cross-sectional view of a portion of the wing assembly 104 and the exemplary link assembly 150 in a folded position. As shown, in the folded position, outer wing 108 is positioned adjacent to inner wing 106. In this example, with the wing assembly 104 folded, the link pin 446, to which the rod end 158 of the fold cylinder 154, the inner wing link 400, and the outer wing link 500 are each pivotally coupled, can be positioned between the inner and outer wings 106, 108. Additionally, the cam pin 252 is located at the first end 236 of the cam slot 214 of the inner wing hinge 200, while the inner link pin 218 is captured within the first section 434 of the link slot 419 in a location at or near the first end 415 (Figure 12) of the link slot 419.

In response to selective actuation of the fold cylinder 154, the fold cylinder 154 can provide a force that is transmitted via the link assembly 150 to facilitate pivotal displacement of the outer wing 108 relative to the inner wing at the main pivot 152 about the main pivot pin 153. Such actuation of the fold cylinder 154 can also facilitate the fold cylinder 154 being pivotally displaced relative to the inner wing 106 at least at a location at which the fold cylinder 154 is pivotally coupled to the inner wing 106. Additionally, such actuation of the fold cylinder 154 can, at least when the wing assembly 104 is in the folded position, include the rod 156 being extended such that the link pin 446 is displaced in generally an outwardly and aft direction away from at least the inner wing 106.

As the second end 404 of the inner wing link 400 is pivotally coupled to the link pin 446, such displacement of the rod 156 away from a location associated with the wing assembly 104 being in the folded position can also facilitate the sliding displacement of the inner wing link 400 about the inner link pin 218. As seen by a comparison of Figures 14 and 15, during at least certain stages of the unfolding of the wing assembly 104, the inner link pin 218 remains captured in the first end 415 of the link slot 419, as seen in Figure 15. Indeed, the first section 434 can be configured such that, at least until the cam pin 252 reaches a transition point 247 (Figure 8), as the rod 156 is being extended, the fold cylinder 154 provides a force that drives a portion of the link cam surface 416 that defines a portion of the first section 434 of the link slot 419 into, or against, the inner link pin 218 that assists in maintaining the inner link pin 218 captured in the first section 434 of the link slot 419. Additionally, as the first end 402 of the inner wing link 400 is attached to the cam pin 252, as the inner wing link 400 is rotated about the inner link pin 218, the inner wing link 400 is moved such that the cam pin 252 is displaced away from the first end 236 (Figure 8) of the cam slot 214 and along a portion of the first path 242 of the first section 240 of the cam slot 214.

By capturing the inner link pin 218 within the first section 240 of the link slot 419 as the cam pin 252 moves along the first path 242 of the first section 240 of the cam slot 214, the cam 254 and link cam 418 are configured to prevent unintended motion of the outer wing 108. Such unintended motion can include motion associated with the outer wing 108 attempting to revert back toward the folded position of the wing assembly 104. Further, such prevention of unintended motion can extend at least until the cam pin 252 reaches the transition point 247. As discussed below, the transition point 247 can be associated with the outer wing 108 being at a position at which the wing assembly 104 is unfolded, and/or at which the link assembly 150 transitions from using movement and force to facilitate the displacement of the outer wing 108 to use of such movement and forces to place the link assembly 150 to a latched state.

As also indicated by Figure 15, the above-mentioned actuation of the fold cylinder 154 can result in the angular orientation of the outer wing 108, and thus the outer wing hinge 300 changing. Moreover, the force generated by the actuation of the fold cylinder 154, and associated transmission of forces by the link assembly 150, including the outer wing link 500, can result in the angular orientation of the outer wing 108 being changed. Such movement can therefore include both the second end 504 of the outer wing link 500 being pivotally displaced about the link pin 446 and the first end 502 of the outer wing link 500 being pivotally displaced about the outer wing pin 526.

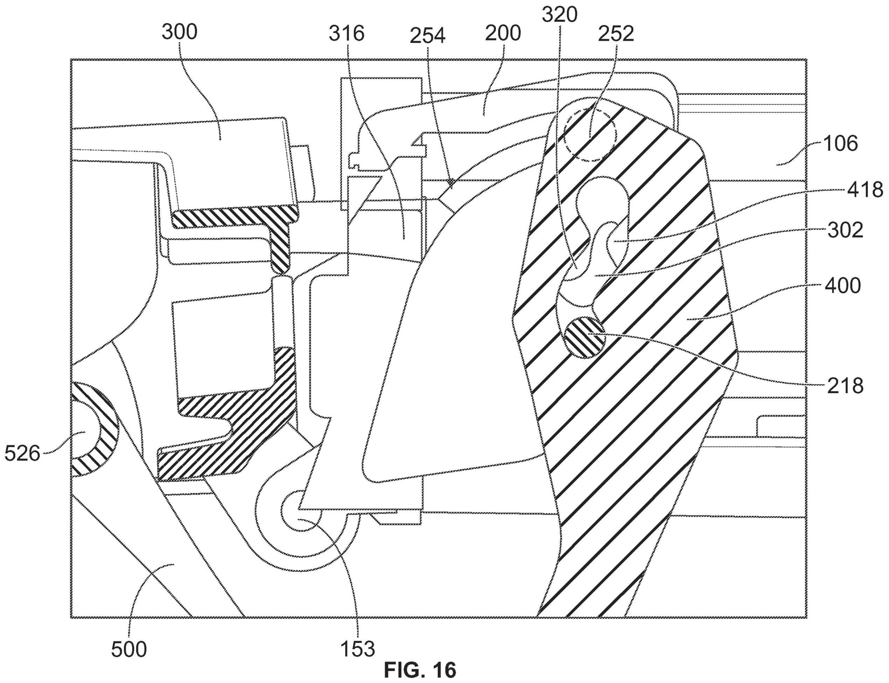

Figure 16 illustrates a top side cross-sectional view of the wing assembly 104 in close proximity to the unfolded position and after the latch arm 316 of the outer wing hinge 300 has cleared the cam pin 252. As seen, as the outer wing 108 continues to be displaced to a position associated with the wing assembly 104 being unfolded, the inner link pin 218 remains captured in the first end 415 of the link slot 419 and the inner wing link 400 continues to rotate about at least the inner link pin 218. This continued rotation of the inner wing link 400 has, in this illustrated stage of the unfolding of the wing assembly 104, resulted in the inner wing link 400 being rotated to a location at which the cam pin 252 is approaching, but has not yet reached, an end of the first path 242, or more specifically, has not yet reached a transition point 247 (Figure 8) at the end of the first path at a location between, or at a union of, the first and second sections 240, 244 and/or the first and second paths 242, 246. Further, in approaching the transition point 247, the cam slot 214 can be configured to accommodate the cam pin 252 being moved to a location at which the latch portion 302 of the outer wing hinge 300 can move freely between the first and second cam walls 202a, 202b and across at least a portion of the associated hinge cavity 224 without the latch portion 302, including the latch arm 316, contacting the cam pin 252. Moreover, with the cam pin 252 having not yet reached at least the transition point 247, the latch portion 302 is able to rotate past, and thereby clear, the cam pin 252 as the latch portion 302 moves to a position at which at least a portion of the latch portion 302 is beneath the cam pin 252, as seen in Figure 16.

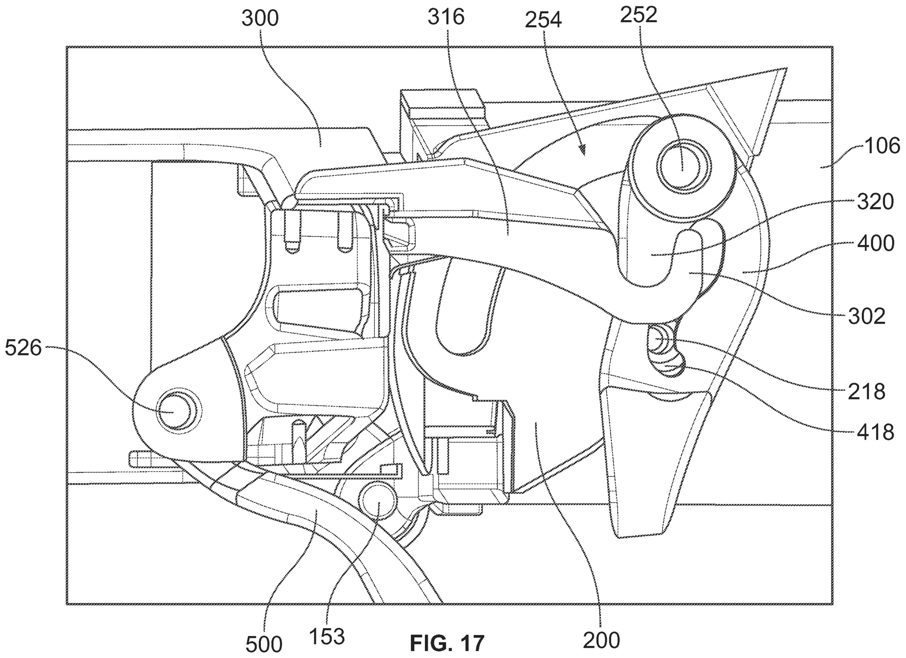

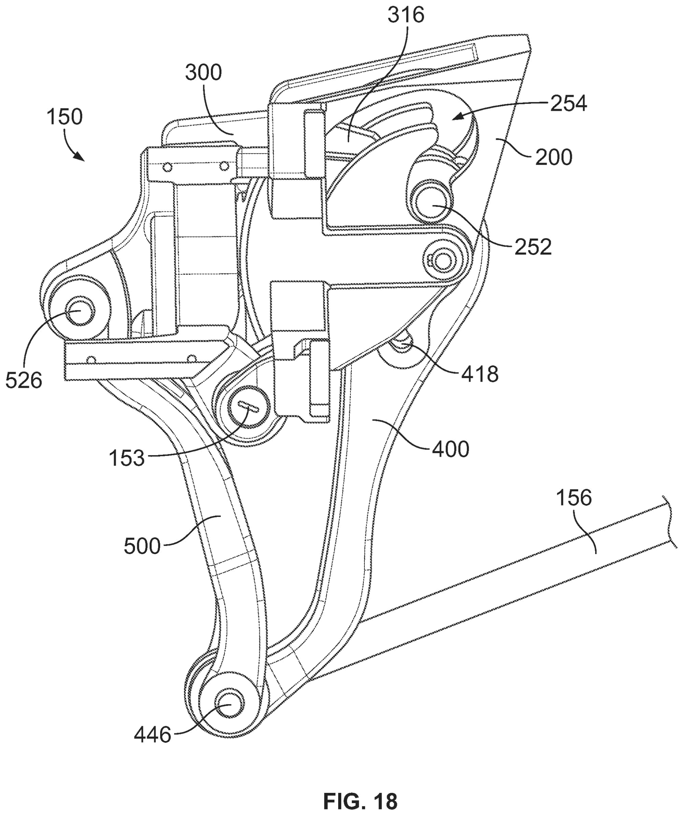

Figure 17 illustrates a portion of the wing assembly 104 when the wing assembly 104 is in the unfolded position, but in which the link assembly 150 is not yet in a latched state. Moreover, continued actuation of the fold cylinder 154 can result in the force transmitted to the outer wing 108 by the link assembly 150 displacing the outer wing 108 until the outer wing 108 reaches a hard stop (Figure 18), such as, for example, by contacting the inner wing 106 or components therebetween at the joint 112. In such a situation, despite the movement of the outer wing 108 being stopped, and the wing assembly 104 being in the unfolded position, the fold cylinder 154 can continue to provide a force that displaces components of the link assembly 150 until the cam pin 252 is received by the latch portion 302 of the outer wing hinge 300 so as to place the link assembly 150 in the latched state. Moreover, in the illustrated implementation, upon the wing assembly 104 reaching the unfolded position, at least some of the movement and forces being transmitted by the link assembly 150 that had been being used to move the outer wing 108 can instead be directed, by the link assembly 150 and the continued actuation of the fold cylinder 154, to latching the link assembly 150 in the latch state so as to lock the wing assembly 104 at the unfolded position.

For example, Figure 17 can correspond to the wing assembly 104 being at the unfolded position and the cam pin 252 having just passed the transition point 247 along the cam slot 214. According to the illustrated implementation, with the cam pin 252 at, or beyond, the transition point 247, the latch portion 302 of the outer wing hinge 300 is positioned to receive the cam pin 252 into the latch aperture 320. Further, with the cam pin 252 at, or just beyond, the transition point 247, the link slot 419 can be configured to begin to move the first end 415 of the link cam 418 away from the inner link pin 218 and move the second section 438 of the link slot 419 about the inner link pin 218.

Accordingly, at least the second section 244 of the cam slot 214 and the second section 438 of the link slot 419, respectively, can be configured to both simultaneously guide, upon the cam pin 252 reaching or passing the transition point 247, a controlled sliding displacement of both the cam pin 252 against the cam surface 212 of the inner wing hinge 200 and the link cam surface 416 of the inner wing link 400 against the inner link pin 418 as the cam pin 252 is moved toward a position at which the cam pin 252 will be received in the latch aperture 320 of the latch portion 302 for the latching of the link assembly 150 in the latch state. In other words, the configurations of at least the second sections 244, 438 of the cam slot 214 and the link slot 419, respectively, can assist in preventing the cam pin 252 from being relatively rapidly dropped directly into the latch aperture 320 of the latch portion 302. Additionally, the configuration of the cam surface 212 and the link cam surface 416 along the second sections 244, 438 of the cam slot 214 and link slot 419, respectively, can assist in maintaining the cam pin 252 and the inner link pin 218 in contact with the corresponding cam surface 212 and the link cam surface 416, including having a lateral touch point with at least a portion of the corresponding cam surface 212 or link cam surface 416, in a manner that can prevent the associated cams 254, 418 from moving out of an intended plane of motion. Such movement of the pins 218, 252 along the corresponding cam surfaces 212, 416 can also occur in connection with the link assembly 150 pulling the cam pin 252 toward, and eventually into, the latch aperture 320 of the latch arm 316 as the link assembly 150 is placed in the latched state.

Further, although not shown, the continued activation of the fold cylinder 154 after the wing assembly 104 is in the unfolded position can also continue to facilitate the pivotal displacement of the inner wing link 400 about the link pin 446, as well as the continued rotational movement of the outer wing link 500 about the link pin 446 and the outer wing 108.

Figure 18 illustrates a top side cross-sectional view of the exemplary link assembly 150 when the wing assembly 104 is at the unfolded position and the link assembly 150 is at the latched state. As seen, the continued actuation of the fold cylinder 154 has facilitated the inner wing link 400 being displaced such that the link slot 419 has been slid about the inner link pin 218 in directions guided by the second and third paths 440, 444 of the second and third sections 438, 442, respectively, such that the second end 417 of the link slot 419 is adjacent to the inner link pin 218. Such movement of the inner wing link 400 has also resulted in the cam pin 252 being displaced in at least a generally aft direction along the second and third sections 244, 248 of the cam slot 214 to a location at which the cam pin 252 is positioned within the latch aperture 320 of the latch portion 302, and, moreover, positioned against at least a portion of the latch surface 318 of the latch portion 302.

The cam pin 252 being engaged with the latch portion 302 when the link assembly 150 is at the latched state can facilitate a transfer of loads at least from the inner wing hinge 200, inner link pin 218, and/or the fold cylinder 154 to the cam pin 252 and/or the outer wing hinge 300. Further, with such a configuration, the continued actuation of the fold cylinder 154 after the wing assembly 104 is at the unfolded position can result in the inner wing link 400, the outer wing link 500, and the fold cylinder 154 being positioned at locations, and with associated configurations, that can enhance resistance by the link assembly 150 and/or fold cylinder 154 to movement of the outer wing 108 in a manner that can assist in maintaining the wing assembly 104 at the fully unfolded position, Additionally, with a transfer of loads to the cam pin 252 and outer wing hinge 300, and off of the inner link pin 218, when the link assembly 150 is at the latched state, the inner wing hinge 200 can be generally disengaged from the load on the link assembly 150. Such disengagement of the inner link pin 218 can include the inner link pin 18 being disengaged from loads that may seek to displace the outer wing 108 toward a folded position, and any other load the inner wing hinge 200 may experience in connection with being pivotally coupled to the main pivot pin 153 and the main pivot 152. The configuration of the link assembly 150 thus can allow for effective load management during operational states, ensuring the sprayer boom 102 maintains structural integrity and reliability. Moreover, the depicted link assembly 150 can, with its interconnected components, efficiently and effectively provide support for controlled folding and unfolding of the agricultural sprayer wing assemblies 104 without reliance on oversized and/or overpowered components.

When the wing assembly 104 is to subsequently be returned from the unfolded position to the folded position, the fold cylinder 154 can be selectively actuated to retract the rod 156, thereby generally moving at least the link pin 446 generally in an inwardly, and fore, direction. Such actuation of the fold cylinder 154 can thus facilitate the link assembly 150, and associated components, being operated in a manner similar to, but in reverse, of that discussed above with respect to Figures 14-18 such that the link assembly 150 is returned from the latched state (Figure 19) to an unlatched state, and the wing assembly 104 is again fully folded.

While the disclosure has been illustrated and described in detail in the foregoing drawings and description, the same is to be considered as exemplary and not restrictive in character, it being understood that only illustrative implementations thereof have been shown and described and that all changes and modifications that come within the spirit of the disclosure are desired to be protected.

## Claims

1. A link assembly (150) that transmits a force provided by selective operation of a driver (154) to pivotally displace a wing assembly (104) between a folded position and an unfolded position, the link assembly (150) comprising:
an inner wing hinge (200) configured to be secured to a first wing (106, 108) of the wing assembly (104), the inner wing hinge (200) including a cam slot (214) and coupled to an inner link pin (218), the cam slot (214) being defined by a cam surface (212);
an outer wing hinge (300) configured to be secured to a second wing (106, 108) of the wing assembly (104), the inner wing hinge (200) and the outer wing hinge (300) being configured to be pivotally coupled together by a main pivot pin (153), the outer wing hinge (300) having a latch arm (316) that includes a latch aperture (320);
an inner wing link (400) having a link slot (419) defined by at least a link cam surface (416), the link slot (419) configured for slideable and rotatable displacement of the inner wing link (400) about the inner link pin (218), the inner wing link (400) being pivotally coupled to the inner wing hinge (200) by a cam pin (252) that is configured for slideable and rotatable displacement within the cam slot (214) and against a least a portion of the cam surface (212), the inner wing link (400) further configured for pivotal coupling to the driver (154) by a link pin (446), the link slot (419) having a configuration that facilitates the inner link pin (218) being pivotally captured at a first location within the link slot (419) until the cam pin (252) is displaced to a transition point (247) of the cam slot (214); and
an outer wing link (500) pivotally coupled to the driver (154) and the inner wing link (400) by the link pin (446) and pivotally coupled to the second wing (106, 108).

2. The link assembly (150) of claim 1, wherein the inner wing hinge (200) comprises a first cam wall (202a) and a second cam wall (202b), wherein the cam slot (214) comprises a first cam slot (214) in the first cam wall (202a) and a second cam slot (214) in the second cam wall (202b), and wherein the inner link pin (218) is coupled to both the first and second cam walls (202a, 202b).

3. The link assembly (150) of claim 2, wherein the first and second cam walls (202a, 202b) define a hinge cavity (224) between the first and second cam walls (202a, 202b), and wherein the latch arm (316) is configured to be pivotally displaced into the hinge cavity (224) as the wing assembly (104) is displaced to the unfolded position.

4. The link assembly (150) of claim 3, wherein the cam slot (214) is configured to prevent the latch arm (316) from having a contact with the cam pin (252) as the latch arm (316) is pivotally displaced into the hinge cavity (224).

5. The link assembly (150) of one of the claims 1 to 4, wherein the link slot (419) is further configured to move the first location within the link slot (419) away from the inner link pin (218) upon the cam pin (252) being displaced to the transition point (247).

6. The link assembly (150) of one of the claims 1 to 5, wherein the cam slot (214) has a plurality of sections (240, 244, 248), each section (240, 244, 248) of the plurality of sections (240, 244, 248) defining a path (242, 246, 250) along which the cam pin (252) is to travel, and wherein a configuration of the path (242) of at least a first section (240) of the plurality of sections (240, 244, 248) is different than a configuration of the path (246) of a second section (244) of the plurality of sections (240, 244, 248).

7. The link assembly (150) of one of the claims 1 to 6, wherein the transition point (247) is positioned between the first section (240) and the second section (244).

8. The link assembly (150) of one of the claims 1 to 7, wherein the link slot (419) comprises a first link slot (419) along a first arm portion (410a) of the inner wing link (400) and a second link slot (419) along a second arm portion (410b) of the inner wing link (400), the first and second arm portions (410a, 410b) being pivotally coupled to the cam pin (252).

9. The link assembly (150) of one of the claims 1 to 8, wherein a second end of the inner wing link (400) includes a first leg portion and a second leg portion, the first and second leg portions being pivotally coupled to the link pin (446), the first and second leg portions defining an outer aperture that receives placement of a rod end of the driver (154).

10. The link assembly (150 of one of the claims 1 to 9, wherein the outer wing link (500) is indirectly coupled to the outer wing link (500) by a pivotal coupling of the outer wing link (500) to the outer wing hinge (300).

11. A method for transmitting a force provided by selective operation of a driver (154) through a link assembly (150) according to one of the claims 1 to 10 to pivotally displace a wing assembly (104) between a folded position and an unfolded position, the method comprising:
pivotally displacing, in response to an actuation of the driver (154), a cam pin (252) away from a first end (236) of a cam slot (214) of an inner wing hinge (200), the inner wing hinge (200) being coupled to a first wing (106, 108) of the wing assembly (104), the cam pin (252) being coupled to an inner wing link (400), the inner wing link (400) being pivotally coupled to the driver (154);
pivotally displacing, by a continued actuation of the driver (154) and before the cam pin (252) reaches a transition point (247) in the cam slot (214), the inner wing link (400) about an inner link pin (218), the inner link pin (218) being coupled to the inner wing hinge (200), the inner link pin (218) being positioned in a link slot (419) of the inner wing link (400), a first section (240) of the link slot (419) configured to capture the inner link pin (218) at a first location within the link slot (419) as the inner wing link (400) is rotated about the inner link pin (218);
pivotally displacing, in response to the continued actuation of the driver (154) and before the cam pin (252) reaches the transition point (247), a latch arm (316) of an outer wing hinge (300) to a position at which the latch arm (316) will receive the cam pin (252) when the link assembly (150) is at a latched state, the outer wing hinge (300) being coupled to a second wing (106, 108) of the wing assembly (104);
displacing, in response to the continued actuation of the driver (154) after the wing assembly (104) is in the unfolded position and the cam pin (252) passes the transition point (247), the link slot (419) about the inner link pin (218) to at least remove the inner link pin (218) from the first location within the link slot (419);
displacing, as the first location within the link slot (419) is moved away from inner link pin (218), the cam pin (252) away from the transition point (247) and toward a second end (238) of the cam slot (214); and
engaging the cam pin (252) with the latch arm (316) as the cam pin (252) moves away from the transition point (247) to place the link assembly (150) in the latched state.

12. The method of claim 11, further comprising:
pivotally displacing, as the driver (154) continues to be actuated and before the cam pin (252) reaches the transition point (247), the outer wing hinge (300) about a main pivot (152), the outer wing hinge (300) pivotally coupled to the inner wing hinge (200) at the main pivot (152).

13. The method of claim 11 or 12, further comprising:
pivotally displacing, in response to the actuation of the driver (154), the inner wing link (400), an outer wing link (500), and the driver (154) about a link pin (446), the outer wing link (500) being further pivotally coupled to the second wing (106, 108).

14. The method of one of the claims 11 to 13, wherein engaging the cam pin (252) with the latch arm (316) comprises the cam pin (252) engaging a latch surface (318) that defines a latch aperture (320) of the latch arm (316).

15. The method of one of the claims 11 to 14, wherein engaging the cam pin (252) further comprises transferring a load from the inner link pin (218) to the cam pin (252).
